# FASCICULE DE BREVET EUROPEEN

(11) **EP 0 847 023 B1**
(45) Date de publication et mention de la délivrance du brevet: **03.03.2004**
(21) Numéro de dépôt: 97402935.7
(22) Date de dépôt: 04.12.1997
(51) Int. Cl.: G06K 7/08

(54) **Procédé pour contrôler et programmer simultanément une pluralité de transpondeurs et dispositif pour mettre en oeuvre ce procédé**
Verfahren zur gleichzeitigen Steuerung und Programmierung mehrerer Transponder und Vorrichtung zur Durchführung des Verfahrens
Method for controlling and programming a plurality of transponders simultaneously and device for implementing the same

(30) Priorité: 04.12.1996 CH 297596
(43) Date de publication de la demande: 10.06.1998
(73) Titulaire: Pagnol, Frédéric, 06610 La Gaude (FR)
(72) Inventeur: Pagnol, Frédéric, 06610 La Gaude (FR)
(74) Mandataire: Tanty, François

(56) Documents cités:
- EP-A- 0 161 779
- EP-A- 0 285 419
- EP-A- 0 405 695
- EP-A- 0 685 811
- EP-A- 0 689 151
- WO-A-89/05549

## Description

La présente invention est relative à un procédé pour contrôler et programmer simultanément de manière automatique une pluralité de transpondeurs ainsi qu'un dispositif pour la mise en oeuvre de ce procédé.

On sait que les transpondeurs sont des dispositifs électroniques de faible dimension et de faible coût qui peuvent être placés sur des objets ou dans des endroits les plus divers pour émettre sous une forme prédéterminée des informations qui ont été programmées dans leur mémoire, lorsqu'ils sont soumis à un rayonnement extérieur par exemple un rayonnement électromagnétique de caractéristiques prédéterminées.

On connaît par la demande de brevet EP-A2-689 151 un procédé pour recevoir les informations d'identification d'un grand nombre de transpondeurs par un seul moyen de communication sans avoir à s'adresser à chaque transpondeur individuellement ou avoir à distinguer entre eux avant de recevoir l'information d'identification. Ce procédé concerne des transpondeurs capables de stocker une seule fois des informations d'identification et de les retransmettre si nécessaire.

Les transpondeurs ne comportent généralement aucune source électrique propre et l'énergie nécessaire à l'émission des informations qu'ils contiennent résulte du fait que le rayonnement qu'on leur envoie et qu'ils captent est utilisé pour charger, par exemple, un condensateur qui restitue ensuite son énergie au circuit électronique du transpondeur pour lui permettre de réaliser l'émission qui sert de support aux informations qu'il transmet.

Les réponses que fournissent les transpondeurs après qu'ils aient été soumis à l'action du rayonnement extérieur qui déclenche leur fonctionnement, sont régies par les règles d'un protocole précis qui détermine les intervalles de temps successifs (ou fenêtres d'émission), durant lesquels le transpondeur émet un rayonnement qui transmet les informations contenues dans sa mémoire et les intervalles de temps successifs (ou fenêtres de réception), durant lesquels le transpondeur ne réalise aucune émission mais durant lesquels il est capable de recevoir des informations émises sous forme d'un rayonnement provenant d'un émetteur extérieur. Ces dernières informations peuvent alors être mises en mémoire et stockées dans le transpondeur.

On comprend que pour jouer son rôle, un transpondeur doit être associé à un émetteur-récepteur extérieur dont les caractéristiques sont telles que, d'une part il peut émettre un rayonnement qui va fournir au transpondeur l'énergie dont ce dernier a besoin et que d'autre part, il peut recevoir et comprendre les informations émises par le transpondeur dans les fenêtres d'émission de ce dernier et émettre des informations que le transpondeur peut recevoir et comprendre dans les fenêtres de réception du transpondeur.

Les transpondeurs les plus simples et les plus économiques dit à "simple lecture" ne peuvent être programmés pour enregistrer de nouvelles informations et sont uniquement capables d'émettre les informations constantes qu'ils ont en mémoire.

Des transpondeurs plus perfectionnés et légèrement plus chers dits à "lecture et écriture" permettent de recevoir des informations provenant de l'émetteur extérieur et de les conserver en mémoire pour les réémettre par la suite lorsqu'on les interroge.

Ces informations inscriptibles dans la mémoire des transpondeurs de ce type peuvent être modifiées à volonté à l'aide de l'émetteur extérieur.

Dans une variante de cette deuxième catégorie, les transpondeurs qui sont dits "à réponse sur ordre" n'émettent vers le récepteur extérieur que lorsque l'émetteur extérieur leur en donne l'ordre, ce qui permet de les synchroniser en adressant simultanément cet ordre à tous les transpondeurs.

Une troisième catégorie de transpondeurs encore plus perfectionnés dits "adressables" peuvent être interrogés et programmés individuellement même lorsqu'ils sont en groupe, mais ils sont d'un coût sensiblement plus élevé que ceux de la catégorie précédente.

Les transpondeurs sont actuellement utilisés en très grand nombre dans beaucoup de domaines, en particulier lors de fabrications en cours pour identifier les objets à leurs différents stades de fabrication.

Ils sont en particulier utilisés lors de la fabrication de vêtements ou d'autres produits textiles pour identifier un nombre important de pièces de vêtement en cours de fabrication ou déjà fabriquées, qui sont contenues dans un même conteneur, et qui comportent chacune un transpondeur qui doit conserver dans sa mémoire, diverses informations concernant le vêtement.

C'est ainsi que lors de la fabrication d'un vêtement, le transpondeur de ce dernier doit contenir dans sa mémoire un premier groupe d'informations concernant le type de vêtement, la nature et la couleur du tissu ainsi que sa taille.

Les vêtements étant généralement fabriqués par série de vêtements identiques qui sont regroupés dans un même conteneur, il est nécessaire d'introduire ce premier groupe d'informations dans la mémoire des transpondeurs de cette série de vêtements.

Pour être expédiés chez les clients, les vêtements ainsi fabriqués sont ensuite répartis, dans différents conteneurs dont chacun peut recevoir des vêtements de types différents, de couleurs différentes et de tailles différentes, ce qui rend nécessaire d'introduire dans chacun de leurs transpondeurs une second groupe d'informations concernant l'identité du client et les conditions de livraison, sans bien entendu modifier les informations de premier groupe concernant par exemple la taille et la couleur du tissu.

Selon l'état de la technique, une telle programmation des différents transpondeurs associés à chaque vêtement est une opération difficile et coûteuse.

En effet, lorsque l'on utilise des transpondeurs à lecture et écriture, il n'est pas possible de les programmer simultanément, car l'émetteur ne les reconnaît en général pas comme un transpondeur unique du fait qu'il est incapable de lire simultanément les signaux d'identification de tous ces transpondeurs qui ne sont pas synchronisés.

Lorsque l'on utilise des transpondeurs adressables qui sont d'un coût beaucoup plus élevé, l'émetteur peut s'adresser individuellement à chaque transpondeur pour programmer dans leur mémoire les informations que l'on veut y introduire, mais l'introduction du groupe d'information dans tous les articles prend un temps important du fait qu'il est nécessaire d'interroger et de programmer successivement tous les transpondeurs du lot que l'on veut programmer.

L'invention permet d'une manière simple, économique et rapide de mettre en mémoire un groupe d'informations simultanément dans une pluralité de transpondeurs qui se trouvent dans un même conteneur et qui contiennent déjà chacun des informations qui peuvent différer d'un transpondeur à l'autre.

L'invention a pour objet les procédés tels que décrits dans les revendications 1 et 2.

Si le récepteur continuait à percevoir une dispersion de l'émission d'identification après la première tentative, cela signifierait qu'au moins un transpondeur est d'un type différent des autres et qu'il devrait être changé.

Un mode de mise en oeuvre préféré du procédé selon l'invention est décrit dans la revendication 3.

Le procédé selon l'invention est basé sur le fait que des transpondeurs identiques, identifiés de la même manière et soumis simultanément à un même rayonnement extérieur doivent émettre les informations d'identification qu'ils ont en mémoire avec un synchronisme parfait, les fenêtres d'émission s'intercalant parfaitement entre les fenêtres de réception durant lesquelles tous les transpondeurs peuvent recevoir et enregistrer les informations qui leur parviennent par l'intermédiaire du rayonnement de l'émetteur extérieur et chacun des signaux binaires d'identification de tous les transpondeurs étant perçus simultanément par le récepteur extérieur.

Lorsqu'un transpondeur a une structure différente de celle des autres transpondeurs ou lorsqu'il a une identification programmée de manière différente, ce transpondeur émet vers le récepteur extérieur des informations d'identification dont les signaux binaires ne sont pas en synchronisme avec ceux des autres transpondeurs, ce qui est perçu par le récepteur extérieur comme une dispersion illisible des informations qui lui sont envoyées par l'ensemble des transpondeurs.

Comme cela a été expliqué précédemment, le procédé selon l'invention est basé sur le fait que le récepteur extérieur est suffisamment sensible pour distinguer les signaux binaires émis par un petit nombre de transpondeurs à un moment où la quasi totalité des autres transpondeurs n'en émettent pas et où ce petit nombre de transpondeurs ne devraient pas non plus en émettre.

Le procédé selon l'invention permet en particulier de détecter le cas où, en raison par exemple de leurs positions, certains transpondeurs n'ont pas été soumis initialement au rayonnement de l'émetteur extérieur exactement au même moment que les autres transpondeurs, auquel cas les fenêtres d'émission d'identification de ces transpondeurs se trouvent décalées par rapport à celles des autres transpondeurs, ce qui conduit à une dispersion qui sera détectée selon l'invention.

La présente invention a également pour objet les dispositifs tels que décrits dans les revendications 4 et 5.

Selon un mode de réalisation particulier de l'invention, l'émetteur extérieur est muni d'une antenne d'émission en forme de solénoïde d'un volume et d'une longueur suffisants pour recevoir le conteneur qui contient les produits qui sont munis des transpondeurs, de manière à pouvoir envoyer à destination de tous ces transpondeurs le rayonnement qui assure leur alimentation en énergie.

Dans un mode de réalisation préférée, l'émetteur-récepteur est muni d'un dispositif qui modifie les caractéristiques de son antenne pour maintenir un accord parfait avec les antennes des transpondeurs malgré les variations de l'environnement électromagnétique.

Dans le but de mieux faire comprendre l'invention, on va en décrire maintenant à titre d'exemple sans caractère limitatif un mode de mise en oeuvre en se référant au dessin annexé dans lequel :
- la figure 1 représente les diagrammes d'émission de l'émetteur extérieur et des transpondeurs, et
- la figure 2 est une vue schématique d'un mode de réalisation du dispositif selon l'invention.

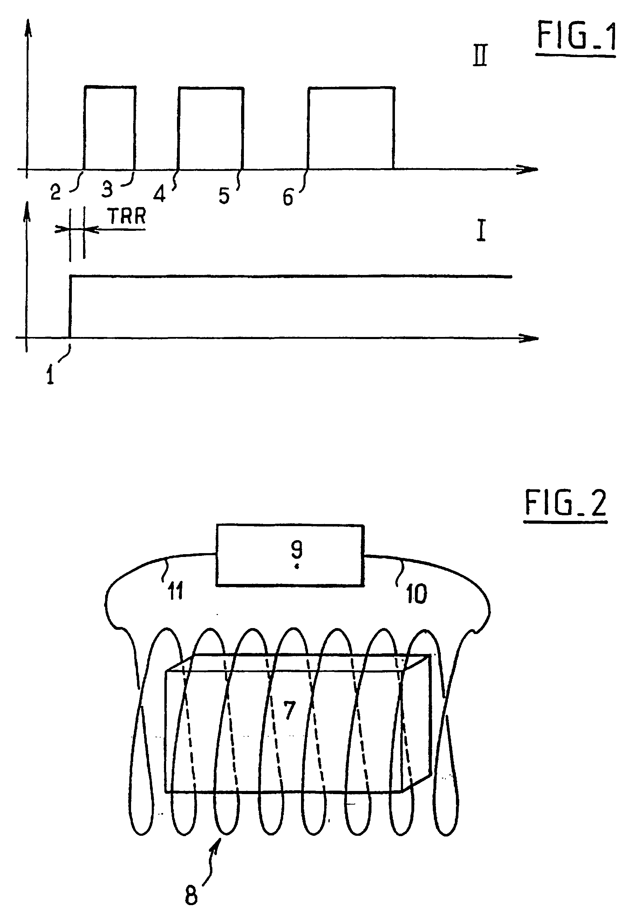

Sur la figure 1, les abscisses correspondent au temps et la figure 2 est une vue schématique d'un mode de réalisation du dispositif selon l'invention.

Le diagramme I correspond à l'émission du rayonnement de l'émetteur externe qui transmet l'énergie nécessaire au fonctionnement des transpondeurs.

Le diagramme II correspond à l'enveloppe des signaux émis pendant les fenêtres d'émission des transpondeurs.

On a représenté sur le dessin la figure le point 1 de l'échelle des temps à partir duquel le rayonnement qui fournit l'énergie aux transpondeurs est envoyé par l'émetteur extérieur. Ce rayonnement a une puissance sensiblement constante pendant toute la durée pendant laquelle il est émis.

On a représenté sur le diagramme II avec la même échelle de temps les émissions qui émanent du transpondeur en direction du récepteur extérieur.

Le point 2 correspond à l'instant où après avoir reçu le rayonnement qui lui est envoyé par l'émetteur extérieur au temps 1, le transpondeur commence à émettre un premier groupe d'informations qui peuvent être reçues par le récepteur extérieur et qui ont pour fonction d'identifier le transpondeur.

La fenêtre dans laquelle ces signaux d'identification peuvent être émis se situe entre les temps 2 et 3.

On remarque que le temps 2 est décalé par rapport au temps 1 auquel le rayonnement extérieur a commencé à être émis vers les transpondeurs, l'intervalle de temps 1-2 correspondant au temps de retard à la réponse du transpondeur qui est marqué TRR sur le dessin.

Les informations qui sont émises dans la fenêtre 2-3 sont des successions de signaux de très courte durée séparés par des intervalles également de très courte durée et qui correspondent à l'identification en signaux binaires du transpondeur qui les émet.

Lorsque les signaux d'identification émis par l'ensemble des transpondeurs qui sont en cours de contrôle ne sont pas rigoureusement synchrones c'est-à-dire lorsqu'ils n'émettent pas à chaque instant des signaux binaires identiques qui s'additionnent, le récepteur extérieur perçoit des signaux de faible intensité émanant de quelques transpondeurs à des moments où il ne reçoit pas aucun signal d'intensité normale qui est émis par la quasi totalité des transpondeurs. Ceci provoque une dispersion des signaux selon la terminologie adoptée dans la rédaction de la présente description.

Une telle dispersion peut provenir du fait qu'au moins un transpondeur a reçu le rayonnement qui lui fournit l'énergie non point au temps 1 mais avec un certain retard dû par exemple au fait qu'il n'était pas encore dans le champ de l'émetteur au temps 1.

Mais cette dispersion peut également provenir du fait qu'alors que tous les transpondeurs ont bien reçu simultanément le rayonnement qui leur fournit leur énergie, au moins un des transpondeurs est identifié par des signaux binaires différents et que de ce fait, les signaux qu'il envoie dans la fenêtre 2,3 pour transmettre son identification ne sont pas les mêmes que ceux des autres transpondeurs, d'où la dispersion qui est perçue par le récepteur externe.

Conformément à l'invention, lorsqu'une telle dispersion est perçue par le récepteur extérieur, ce dernier provoque la coupure du rayonnement qui fournit l'énergie aux transpondeurs lesquels deviennent peu de temps après inactifs.

L'émetteur extérieur reprend alors l'émission du rayonnement qui fournit l'énergie à l'ensemble des transpondeurs et au bout du temps de retard à la réponse TRR, tous les transpondeurs émettent à nouveau dans la fenêtre d'émission 2-3.

Il est alors extrêmement probable que la totalité des transpondeurs reçoivent simultanément le rayonnement, ce qui leur permet de déclencher simultanément leur fonctionnement. Le ou les transpondeurs qui n'étaient pas encore dans le champ de l'antenne au temps 1 peuvent avoir modifié leur position vis-à-vis de l'antenne et se trouvent alors dans le champ rayonné par cette dernière.

Si le récepteur extérieur perçoit sans dispersion les signaux émis par les transpondeurs dans la fenêtre 2-3, cela signifie que tous les transpondeurs ont la même identification, et sont correctement synchronisés ce qui permet de poursuivre le processus de programmation sans risque d'écraser ou de détruire certaines informations qui sont déjà programmées dans les transpondeurs.

Si au contraire, les signaux perçus par le récepteur externe dans la fenêtre 2-3 continuent à donner lieu à une dispersion, cela signifie qu'il a une grande probabilité pour qu'au moins un transpondeur de nature différente soit mélangé aux transpondeurs qui sont en cours de contrôle.

Dans cette dernière hypothèse, il convient alors de rechercher le ou les transpondeurs qui ne sont pas du type voulu et de les éliminer ou de les remplacer.

Cet incident est exceptionnel car les transpondeurs sont, en général, livrés en lots parfaitement homogènes.

Dans l'hypothèse la plus probable, où le récepteur extérieur a perçu sans dispersion les signaux binaires émis dans la fenêtre 2-3 par l'ensemble des transpondeurs, l'émission du rayonnement qui fournit l'énergie aux transpondeurs est maintenue est l'émetteur extérieur choisit la fenêtre de réception des transpondeurs qui correspond à la programmation du groupe d'information qu'on veut mettre en mémoire dans les transpondeurs et il envoie les signaux correspondants qui sont enregistrés par tous les transpondeurs.

On a schématiquement représenté sur la figure 1, un dispositif pour mettre en oeuvre le procédé selon l'invention.

Selon ce dispositif, un conteneur 7 schématiquement représenté sur la figure 2 contient différents articles, tels que par exemple des vêtements, qui sont chacun muni d'un transpondeur dans lequel on désire programmer un groupe d'informations qui sont identiques pour tous les transpondeurs.

Conformément à l'invention, ce conteneur 7 est placé à l'intérieur d'une antenne 8 constituée par un solénoïde qui est relié à l'émetteur récepteur extérieur 9 par ses spires d'extrémité 10 et 11.

Les dimensions du solénoïde sont telles que le champ électromagnétique des rayonnements émis par le solénoïde est le même en tous les points du conteneur 7 et par conséquent en tous les points où se trouvent les différents transpondeurs.

Lorsque le conteneur est placé dans les conditions qui viennent d'être décrites ci-dessus, les informations d'identification émises par les différents transpondeurs après que leur énergie leur ait été transmise par l'émetteur-récepteur extérieur par l'intermédiaire de l'antenne, sont toutes synchronisées et sont perçues par l'émetteur-récepteur comme des signaux uniques sans aucune dispersion.

Comme exposé précédemment, ceci permet d'inscrire un nouveau groupe d'informations dans chacun des transpondeurs sans perturber les informations qu'ils ont déjà en mémoire.

Il importe bien entendu que le rayonnement émis par le solénoïde 9 soit accordé sur la fréquence de réception des différents transpondeurs.

Dans un mode de réalisation préféré du dispositif selon l'invention, on tient compte des éléments perturbateurs de l'environnement électromagnétique au voisinage du dispositif tels que ceux qui peuvent être créés par des moteurs ou d'autres champs électriques. Pour cela, on associe au récepteur-émetteur 9 un dispositif qui modifie les caractéristiques de l'antenne 8 pour qu'elle demeure parfaitement accordée sur l'antenne des transpondeurs malgré les variations de l'environnement électromagnétique.

On voit que l'invention permet d'une manière simple et rapide de mettre simultanément en mémoire dans tous les transpondeurs un même groupe d'informations sans modifier les informations qui ont déjà été mises en mémoire dans les transpondeurs, ces dernières informations pouvant être différentes les unes des autres d'un transpondeur à l'autre.

On conçoit ainsi que selon l'invention, il est possible d'associer à chaque article muni d'un transpondeur des groupes d'information successifs qui correspondent à diverses phases de sa fabrication ou de sa commercialisation, ces différents groupes d'information étant chaque fois enregistrés simultanément dans une pluralité de transpondeurs.

Les transpondeurs ainsi que l'émetteur-récepteur qui est situé à l'extérieur, peuvent être réalisés avec des techniques connues.

Il va de soi qu'il faut que les émissions et les réceptions des transpondeurs et de l'émetteur récepteur-extérieur aient des caractéristiques appropriées pour leur permettre leur coopération.

## Revendications

1. Procédé pour mettre en mémoire un groupe d'informations simultanément dans une pluralité de transpondeurs de type « à lecture et écriture » qui se trouvent rassemblés, par exemple dans un même conteneur (7) et qui contiennent déjà chacun des informations qui peuvent différer d'un transpondeur à l'autre, **caractérisé par le fait que** :
(a) l'on émet à destination de la pluralité de transpondeurs un rayonnement provenant d'un émetteur extérieur (9) qui fournit l'énergie nécessaire au fonctionnement des transpondeurs ;
(b) l'on recueille sur un récepteur extérieur (9) les informations d'identification émises par les transpondeurs durant une première fenêtre d'émission qui leur est allouée à cet effet ;
(c) l'on détermine par le récepteur extérieur (9) si ces informations d'identification sont ou non synchronisées et sont ou non identiques ;
(d) si lesdites informations ne sont pas synchronisées ou ne sont pas identiques, on interrompt le rayonnement de l'émetteur extérieur (9) un temps suffisant pour désactiver tous les transpondeurs ;
(e) l'on remet en fonctionnement l'émetteur extérieur (9) et l'on recueille à nouveau les informations d'identification émises par l'ensemble des transpondeurs pendant la première fenêtre d'émission d'identification qui leur est allouée à cet effet ; et après avoir vérifié que ces informations sont synchronisées et sont identiques, on envoie par l'émetteur extérieur (9) dans une fenêtre de réception des transpondeurs un groupe d'informations qui sont simultanément programmées dans la mémoire de tous les transpondeurs.

2. Procédé pour mettre en mémoire un groupe d'informations simultanément dans une pluralité de transpondeurs « à réponse sur ordre » qui se trouvent rassemblés, par exemple dans un même conteneur (7) et qui contiennent déjà chacun des informations qui peuvent différer d'un transpondeur à l'autre, **caractérisé par le fait que** :
(a) l'on émet à destination de la pluralité de transpondeurs un ordre d'identification provenant d'un émetteur extérieur (9) ;
(b) l'on recueille sur un récepteur extérieur (9) les informations d'identification émises par les transpondeurs durant une première fenêtre d'émission qui leur est allouée à cet effet ;
(c) l'on détermine par le récepteur extérieur (9) si ces informations d'identification sont ou non synchronisées et sont ou non identiques ;
(d) si lesdites informations ne sont pas synchronisées ou ne sont pas identiques, l'on émet un nouvel ordre d'identification aux transpondeurs pour recueillir une nouvelle fois les informations d'identification émise par l'ensemble des transpondeurs et après avoir vérifié que ces informations sont synchronisées et sont identiques, on envoie par l'émetteur extérieur (9) dans une fenêtre de réception des transpondeurs un groupe d'informations qui sont simultanément programmées dans la mémoire de tous les transpondeurs.

3. Procédé selon l'une quelconque des revendications 1 ou 2, **caractérisé par le fait qu'**après avoir programmé dans chacun des transpondeurs de plusieurs pluralités d'articles, des groupes d'informations identiques pour chaque pluralité ; on regroupe différents articles appartenant à plusieurs pluralités, on vérifie que le récepteur extérieur (9) ne perçoit pas que les informations d'identification des transpondeurs ne sont pas synchronisées ou ne sont pas identiques dans la première fenêtre d'émission d'identification des transpondeurs ; et l'on envoie par l'émetteur extérieur un second groupe d'informations qui sont programmées dans la mémoire de tous les transpondeurs.

4. Dispositif comportant :
- un émetteur extérieur (9) destiné à alimenter en énergie des transpondeurs d'une pluralité de transpondeurs de type « à lecture et écriture » qui se trouve rassemblés, par exemple dans un même conteneur (7) et qui contiennent déjà chacun des informations qui peuvent différer d'un transpondeur à l'autre, et
- un récepteur extérieur (9) apte à recueillir les informations d'identification émises par les transpondeurs de la pluralité de transpondeurs durant une première fenêtre d'émission qui leur est allouée à cet effet, et à déterminer si les informations d'identification émises par les différents transpondeurs sont ou non synchronisées et sont ou non identiques, et si le récepteur extérieur (9) constate que les informations d'identification émises par les transpondeurs ne sont pas synchronisées ou ne sont pas identiques, il interrompt le rayonnement de l'émetteur extérieur qui alimente en énergie les transpondeurs et provoque ainsi leur arrêt ; puis il rétablit le rayonnement qui synchronise alors tous les transpondeurs ; et après réception des informations d'identification synchronisées et identiques, il émet un groupe d'informations que tous les transpondeurs enregistrent simultanément dans leur mémoire.

5. Dispositif comportant:
- un émetteur extérieur (9) destiné à émettre un ordre d'identification à des transpondeurs d'une pluralité de transpondeurs de type « à réponse sur ordre » qui se trouve rassemblés, par exemple dans un même conteneur (7) et qui contiennent déjà chacun des informations qui peuvent différer d'un transpondeur à l'autre, et
- un récepteur extérieur (9) apte à recueillir les informations d'identification émises par les transpondeurs de la pluralité de transpondeurs durant une première fenêtre d'émission qui leur est allouée à cet effet, et à déterminer si les informations d'identification émises par les différents transpondeurs sont ou non synchronisées et sont ou non identique, et si le récepteur extérieur (9) constate que les informations d'identification émises par les transpondeurs ne sont pas synchronisées ou ne sont pas identiques, il envoie un nouvel ordre d'identification à l'ensemble des transpondeurs ; et après réception des informations d'identification synchronisées et identiques de l'ensemble des transpondeurs, il émet un groupe d'informations que tous les transpondeurs enregistrent simultanément dans leur mémoire.

6. Dispositif selon l'une quelconque des revendications 4 à 5, **caractérisé par le fait que** l'émetteur extérieur (9) est muni d'une antenne d'émission (8) en forme de solénoïde d'un volume et d'une longueur suffisants pour recevoir un conteneur (7) qui contient les produits qui sont munis de transpondeurs de manière à pouvoir envoyer simultanément à tous ces transpondeurs le rayonnement qui assure leur alimentation en énergie et/ou l'ordre d'émettre leur identification.

7. Dispositif selon la revendication 6, **caractérisé par le fait que** l'émetteur extérieur (9) est muni d'un dispositif qui modifie les caractéristiques de son antenne (8) pour maintenir un accord parfait avec les antennes des transpondeurs malgré les variations de l'environnement électromagnétique.

## Patentansprüche

1. Verfahren zur gleichzeitigen Speicherung einer Gruppe von Informationen in eine Mehrzahl von Transpondern des Typs "Lesen und Schreiben", welche z.B. in ein- und demselben Container (7) versammelt sind und welche jeweils bereits Informationen enthalten, die von einem Transponder zum anderen unterschiedlich sein können;
**dadurch gekennzeichnet, daß**
(a) eine von einem externen Emitter (9) herrührende Strahlung in Richtung der Mehrzahl der Transponder emittiert wird, wobei dieser externe Emitter die für das Funktionieren der Transponder erforderliche Energie liefert;
(b) auf einem externen Empfänger (9) die Informationen zur Identifikation gesammelt werden, die von den Transpondern während eines ersten Emissionsfensters ausgesendet werden, welches ihnen zu diesem Zweck zugeordnet ist;
(c) durch den externen Empfänger (9) festgestellt wird, ob diese Informationen synchronisiert sind oder nicht und ob diese identisch sind oder nicht;
(d) sofern die besagten Informationen nicht synchronisiert bzw. nicht identisch sind, Kennzeichnung dahingehend, daß die Abstrahlung des externen Emitters (9) für eine hinreichend lange Zeit unterbrochen wird, um alle Transponder zu deaktivieren;
**(e)** der externe Emitter (9) erneut in Betrieb gesetzt wird und daß erneut die Informationen zur Identifikation gesammelt werden, die von der Gesamtheit der Transponder während des ersten Emissionsfensters zur Identifikation, welches ihnen zu diesem Zweck zugeordnet ist, emittiert werden; und daß, nachdem verifiziert worden ist, daß diese Informationen synchronisiert und identisch sind, eine Gruppe von Informationen durch den externen Emitter (9) in ein Empfangsfenster der Transponder übermittelt wird, welche gleichzeitig in dem Speicher aller Transponder programmiert werden.

2. Verfahren zur gleichzeitigen Speicherung einer Gruppe von Informationen in eine Mehrzahl von Transpondern des Typs "Reaktion auf Befehl" (bzw. "Antwort auf Kommando"), welche z.B. in ein- und demselben Container (7) versammelt sind und welche jeweils bereits Informationen enthalten, die von einem Transponder zum anderen unterschiedlich sein können;
**dadurch gekennzeichnet, daß**
**(a)** einer von einem externen Emitter (9) herrührender Identifikationsbefehl in Richtung der Mehrzahl der Transponder emittiert wird;
**(b)** auf einem externen Empfänger (9) die Informationen zur Identifikation gesammelt werden, die von den Transpondern während eines ersten Emissionsfensters ausgesendet werden, welches ihnen zu diesem Zweck zugeordnet ist;
(c) durch den externen Empfänger (9) festgestellt wird, ob diese Identifikations-Informationen synchronisiert sind oder nicht und ob diese identisch sind oder nicht;
(d) ob nun die besagten Informationen synchronisiert sind oder nicht bzw. identisch sind oder nicht, wird ein erneuter Befehl ("Kommando") zur Identifikation an die Transponder emittiert, um ein neues Mal die von der Gesamtheit der Transponder emittierten Identifikations-Informationen zu sammeln; nachdem verifziert worden ist, daß diese Informationen synchronisiert und identisch sind, wird durch den externen Emitter (9) in ein Empfangsfenster der Transponder eine Gruppe von Informationen übermittelt, welche gleichzeitig in den Speicher aller Transponder übermittelt wird.

3. Verfahren gemäß einem der Ansprüche 1 oder 2;
**dadurch gekennzeichnet, daß**
nachdem in einem jeden der Transponder mehrerer Datensätze Gruppen von Informationen programmiert wurden, die bezüglich einer jeden Mehrheit von Datensätzen identisch sind, diverse, mehreren Gruppen zugehörige Datensätze zusammengefaßt werden; es wird dabei überprüft, ob der externe Empfänger (9) nicht wahrnimmt, daß die Identifikations-Informationen der Transponder im ersten Emissionsfenster zur Identifikation der Transponder nicht synchronisiert bzw. nicht identisch sind. Über den externen Emitter wird eine zweite Gruppe von Informationen übermittelt, welche in den Speicher von allen Transpondern programmiert werden.

4. Vorrichtung mit folgenden Bestandteilen:
- Ein externer Emitter (9), welcher die Energie für Transponder von mehreren Transpondern des Typs "Lesen und Schreiben" liefern soll, welche z.B. in ein- und demselben Container (7) versammelt sind und welche jeweils bereits Informationen enthalten, die von einem Transponder zum anderen unterschiedlich sein können und
- Ein externer Empfänger (9), welcher geeignet ist, die von den Transpondern der Mehrzahl von Transpondern emittierten Identifikations-Informationen zu sammeln, und zwar während eines ersten Emissionsfensters, das diesen zu diesem Zweck zugeordnet ist, und welcher ebenfalls in der Lage ist, zu erfassen, ob die von den verschiedenen Transpondern emittierten Identifikations-Informationen synchronisiert sind oder nicht und identisch sind oder nicht, und wenn der externe Empfänger (9) feststellt, daß die von den Transpondern emittierten Identifikations-Informationen nicht synchronisiert oder nicht identisch sind, dieser die Abstrahlung des die Transponder mit Energie versorgenden externen Emitters unterbricht und somit deren Anhalten hervorruft; daraufhin stellt er die Abstrahlung wieder hier, welche dann alle Transponder synchronisiert; nach Empfang der synchronisierten und identischen Identifikations-Informationen emittiert er eine Gruppe von Informationen, die alle Transponder gleichzeitig in ihren Speicher ablegen.

5. Vorrichtung mit folgenden Bestandteilen:
- Ein externer Emitter (9), welcher einen Identifikationsbefehl an Transponder von mehreren Transpondern des Typs "Reaktion auf Befehl" (bzw. "Antwort auf Kommando") emittieren soll, welche z.B. in ein- und demselben Container (7) versammelt sind und welche jeweils bereits Informationen enthalten, die von einem Transponder zum anderen unterschiedlich sein können, und
- Ein externer Empfänger (9), welcher geeignet ist, die von den Transpondern der Mehrzahl von Transpondern emittierten Identifikations-Informationen zu sammeln, und zwar während eines ersten Emissionsfensters, das diesen zu diesem Zweck zugeordnet ist, und welcher ebenfalls in der Lage ist, zu erfassen, ob die von den verschiedenen Transpondern emittierten Identifikations-Informationen synchronisiert sind oder nicht und identisch sind oder nicht,
und wenn der externe Empfänger (9) feststellt, daß die von den Transpondern emittierten Identifikations-Informationen nicht synchronisiert oder nicht identisch sind, dieser an alle Transponder einen neuen Identifikationsbefehl sendet; nach Empfang der synchronisierten und identischen Identifikations-Informationen von allen Transpondern emittiert er eine Gruppe von Informationen, die alle Transponder gleichzeitig in ihren Speicher ablegen.

6. Vorrichtung nach einem der Ansprüche 4 und 5;
**dadurch gekennzeichnet, daß**
der externe Emitter (9) mit einer solenoidförmigen Emissionsantenne (8) ausgestattet ist, deren Volumen und Länge ausreichend sind, um einen Container (7) aufzunehmen, welcher die mit Transpondern ausgestatteten Produkte enthält, so daß gleichzeitig an alle diese Transponder die Strahlung ausgesendet werden kann, die deren Energieversorgung und/oder den Befehl (das "Kommando") zur Aussendung ihrer Identifikation gewährleistet.

7. Vorrichtung nach Anspruch 6;
**dadurch gekennzeichnet, daß**
der externe Emitter (9) mit einer Vorrichtung ausgestattet ist, welche die Charakteristik seiner Antenne (8) verändert, um eine perfekte Abstimmung mit den Antennen der Transponder ungeachtet von Variationen des elektromagnetischen Umfelds aufrechtzuerhalten.

## Claims

1. Method for simultaneously placing a data group in memory in a plurality of "read/write" transponders that are grouped together, for example in the same container (7), each transponder already containing data items that may differ from one transponder to another, **characterized in that**:
(a) radiation is transmitted to the plurality of transponders from an external transmitter (9) that supplies the power needed to operate the transponders;
(b) an external receiver (9) receives the identification data items transmitted by the transponders during a first, transmit window that is allocated to them for this purpose;
(c) the external receiver (9) determines whether or not these identification data items are synchronized and whether or not they are identical;
(d) if the said data items are not synchronized or are not identical, the radiation from the external transmitter (9) is interrupted for a time long enough to deactivate all the transponders; and
(e) the external transmitter (9) is put into operation again and the identification data items transmitted by all of the transponders during the first, identification transmit window that is allocated to them for this purpose are received again; and, after having checked that these data items are synchronized and are identical, a data group is transmitted by the external transmitter (9) in a receive window of the transponders, which data items are simultaneously programmed in the memory of all the transponders.

2. Method for simultaneously placing a data group in memory in a plurality of "response-on-command" transponders that are grouped together, for example in the same container (7), each transponder already containing data items that may differ from one transponder to another, **characterized in that**:
(a) an identification command is transmitted to the plurality of transponders from an external transmitter (9);
(b) an external receiver (9) receives the identification data items transmitted by the transponders during a first, transmit window that is allocated to them for this purpose;
(c) the external receiver (9) determines whether or not these identification data items are synchronized and whether or not they are identical; and
(d) if the said data items are not synchronized or are not identical, a new identification command is transmitted to the transponders in order to receive once again the identification data items transmitted by all of the transponders and, after having checked that these data items are synchronized and are identical, a data group is transmitted by the external transmitter (9) in a receive window of the transponders, which data items are simultaneously programmed in the memory of all the transponders.

3. Method according to either of Claims 1 and 2, **characterized in that**, after having programmed, in each of the transponders of several sets of articles, data groups that are identical for each set, various articles belonging to several sets are grouped together, a check is made that the external receiver (9) does not perceive that the identification data items from the transponders are not synchronized or are not identical in the first, transmit window for identifying the transponders, and a second data group is transmitted by the external transmitter, which data items are programmed in the memory of all the transponders.

4. Device comprising:
- an external transmitter (9) intended to supply power to the transponders of a plurality of "read/write"-type transponders that are grouped together, for example in the same container (7), each transponder already containing data items that may differ from one transponder to another; and
- an external receiver (9) capable of receiving the identification data items transmitted by the transponders of the plurality of transponders during a first, transmit window that is allocated to them for this purpose and in determining whether or not the identification data items transmitted by the various transponders are synchronized and whether or not they are identical and, if the external receiver (9) finds that the identification data items transmitted by the transponders are not synchronized or are not identical, it interrupts the radiation of the external transmitter that supplies the transponders with power and thus stops them; then it re-establishes the radiation that then synchronizes all the transponders; and, after the synchronized and identical identification data items have been received, it transmits a data group that all the transponders record simultaneously in their memory.

5. Device comprising:
- an external transmitter (9) intended to transmit an identification command to transponders of a plurality of "respond-on-command" transponders that are grouped together, for example in the same container (7), each transponder already containing data items that may differ from one transponder to another; and
- an external receiver (9) capable of receiving the identification data items transmitted by the transponders of the plurality of transponders during a first, transmit window that is allocated to them for this purpose and in determining whether or not the identification data items transmitted by the various transponders are synchronized and whether or not they are identical; and, if the external receiver (9) finds that the identification data items transmitted by the transponders are not synchronized or are not identical, it transmits a new identification command to all of the transponders; and, after the synchronized and identical identification data items have been received from all of the transponders, it transmits a data group that all the transponders record simultaneously in their memory.

6. Device according to either of Claims 4 and 5, **characterized in that** the external transmitter (9) is provided with a transmit antenna (8) in the form of a solenoid having a volume and a length that are sufficient to accommodate a container (7) that contains the products that are provided with transponders so as to be able to transmit, simultaneously to all these transponders, the radiation that supplies them with power and/or the command to transmit their identification.

7. Device according to Claim 6, **characterized in that** the external transmitter (9) is provided with a device that modifies the characteristics of its antenna (8) in order to remain perfectly in tune with the antennas of the transponders despite any variations in the electromagnetic environment.
